(19) Europäisches Patentamt
European Patent Office
Office européen des brevets

(11) **EP 2 541 798 A1**

(12) **EUROPEAN PATENT APPLICATION**

(43) Date of publication:
**02.01.2013 Bulletin 2013/01**

(51) Int Cl.:
***H04B 7/06*** (2006.01)     ***H04B 7/04*** (2006.01)
***H04L 25/02*** (2006.01)

(21) Application number: **11005254.5**

(22) Date of filing: **28.06.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **MIMOON GmbH
47057 Duisburg (DE)**

(72) Inventors:
• **Wu, Hanguang
47057 Duisburg (DE)**
• **Wen, Qingchao
47057 Duisburg (DE)**

(74) Representative: **Eisenführ, Speiser & Partner
Postfach 31 02 60
80102 München (DE)**

(54) **Robust beamforming method and apparatus**

(57)     The present invention relates to a method and apparatus for controlling transmission of a signal through a wireless transmission channel by using beamforming in a multiple antenna system, wherein reference signals from the other transmission end of the transmission channel are received and channel estimation is performed based on the received reference signals. An average channel covariance matrix is decomposed into several terms and a eigenvector precoding or beamforming is performed based on these terms.

FIG. 1

EP 2 541 798 A1

**Description**

FIELD OF THE INVENTION

The present invention relates to a method, apparatus and computer program product for transmitting a signal using beamforming or precoding in a multiple-input-multiple-output (MIMO) antenna system, in particular a MIMO antenna system for Orthogonal Frequency Division Multiplexing (OFDM) transmission in cellular network systems according to the Long Term Evolution (LTE) standard.

BACKGROUND OF THE INVENTION

Wireless communications systems transmit data over a channel with varying characteristics in both time and frequency. The variation in time is usually caused by movements of a mobile station (or mobile terminal or user equipment in LTE terms) at the transmitting and/or or receiving end. The variation in frequency on its part arises from signal propagation over the different paths. The signal components arrive at the receive antenna having different delays, amplitudes, and phases. This multipath propagation is responsible for the frequency selectivity of a wireless channel. Typically, a wireless channel severely affects the data transmission.

The use of an OFDM system allows for a low complexity equalization of the disturbed signal. OFDM is a multicarrier transmission scheme where the whole system bandwidth is divided into smaller data streams. These data streams are transmitted using different sub-carriers which are orthogonal to each other. Thus, each sub-carrier carries a portion of the total data amount. An Inverse Fast Fourier Transform (IFFT) in the transmitter and a Fast Fourier Transform (FFT) in the receiver facilitates an efficient implementation of an OFDM transmission. Orthogonality of the OFDM subcarriers means that each subcarrier has an integer number of cycles in the FFT calculation interval and that the spectrum of a subcarrier contains spectral nulls at all other subcarrier frequencies.

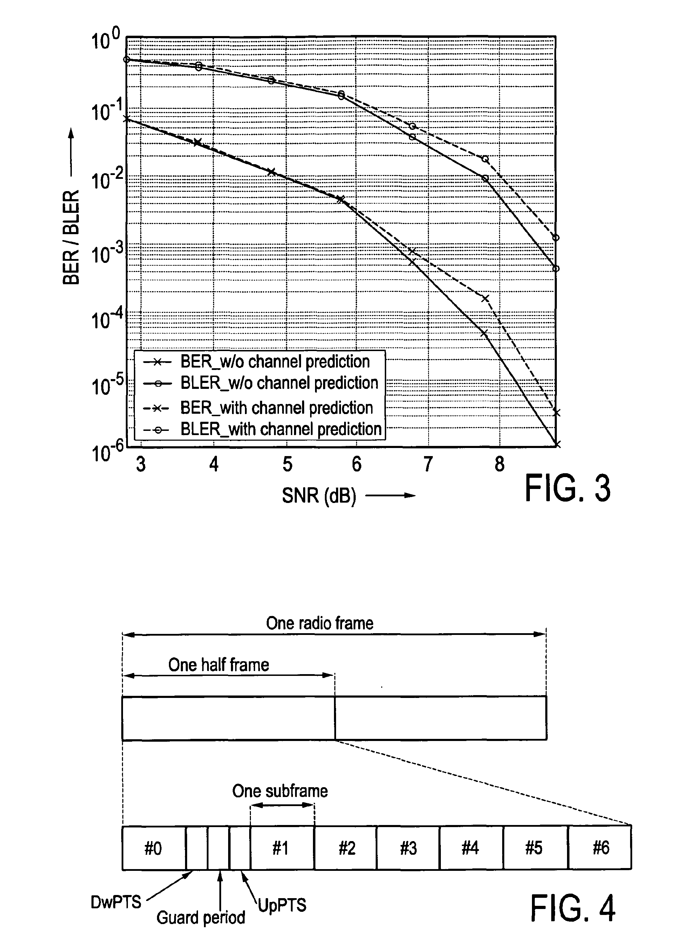

Fig. 4 shows an LTE frame structure containing sub-carriers used for transmitting user data and control information as well as sub-carriers with scattered pilots needed for estimating the wireless channel. One resource block (RB) consists of $N^{DL}_{symb}$ OFDM symbols on $N^{RB}_{sc}$ subcarriers and is transmitted in one downlink slot with duration $T_{slot}$, while one resource element corresponds to one OFDM symbol on one subcarrier. A more detailed description of this frame structure is given in the 3rd Generation Partnership Project (3GPP) specification TS 36.211, "Evolved Universal Radio Access (E-UTRA); Physical channels and modulation".

Today's communications systems deploy MIMO techniques where different signals broadcasted by separate transmit antennas are superimposed. MIMO technology has attracted attention in wireless communications, because it offers significant increases in data throughput and link range without additional bandwidth or transmit power. It achieves this by higher spectral efficiency (more bits per second per hertz of bandwidth) and link reliability or diversity (reduced fading).

Channel estimation is usually performed by using reference symbols (pilots) and received symbols. The reference symbols are placed among the transmit signals and they are known to both the transmitter and the receiver. Transmitting more reference signals can generally improve the accuracy of channel estimation. However, it also reduces the spectral efficiency of the system. Channel estimation can be improved by additionally using the already detected data symbols as reference signals for estimation. This generally improves channel estimation accuracy in high signal-to-noise ratio (SNR) conditions.

Precoding is a technique that exploits the channel knowledge to operate on the signal at the transmitter before transmission. This technique can be used to improve the link performance in a MIMO system. In a practical system, transmit channel knowledge can be obtained by two principles: by feedback from the receiver or by exploiting channel reciprocity in a time division duplex (TDD) system. In both cases, there exists a delay, such as a scheduling or a feedback delay between the moment that the channel knowledge is measured or fed back and the moment that it is used for precoding design at the transmitter. Such delay, together with the channel estimation error will degrade the performance promised by precoding techniques.

Channel knowledge delay can be mitigated by channel tracking techniques. For example, by exploiting the time correlation of the channel it is possible to predict the channel in the future based on the current channel estimation. In multicarrier systems, especially if the number of subcarriers is high, the number of subcarrier channels needed to be estimated and tracked could be very high which is associated with high computational complexity and may not be feasible for practical implementation.

SUMMARY

It is an object of the present invention to mitigate performance degradation due to the influence of channel knowledge delay in a precoding or beamforming process, while keeping computational complexity low.

This object is achieved by a method as claimed in claim 1, an apparatus as claimed in claim 7, and a computer program product as claimed in claim 13.

Accordingly, the proposed robust beamforming with low computational complexity can be used to mitigate performance degradation due to the influence of channel knowledge delay in a beamforming system. The average covariance matrix is decomposed into several terms. Each term is a function of the channel matrix of an initial subframe or channel mean of the sub-carriers or both, which can be saved in the memory without having to recompute every subframe. Subsequently, eigenvector precoding is calculated based on these terms resulting in significantly reduced computational complexity. Computational complexity in terms of the number of multiplications is thereby significantly saved compared to a straightforward channel prediction and update procedure, which allows a more relaxed requirement for DSP implementation.

In an exemplary implementation, the dominant eigenvector of a decomposed average channel covariance matrix of a transmission subframe may be used as a beamforming vector for transmitting the transmission subframe.

In a further exemplary implementation, only a part of the total number of available transmission subcarriers may be used for decomposing the average channel covariance matrix.

In a still further exemplary implementation, the channel estimation may be performed by applying a minimum mean square error (MMSE) estimation of the transmission channel at a transmission subframe. As an example of such an MMSE estimation, a one-dimensional Wiener filtering may be used.

In a still further exemplary implementation, transmission resource blocks may be divided into a predetermined number of groups of resource blocks and the same beamforming vector may be applied to all subcarriers inside a group.

The above apparatus may be implemented as a hardware circuit integrated on a single chip or chip set, or wired on a circuit board. As an alternative, at least parts of the apparatus may be implemented as a software program or routine controlling a processor or computer device. As an example, the software program or routine may be implemented in C type programming language.

Other advantageous modifications are defined in the dependent claims.

BRIEF DESCRIPTION OF THE DRAWINGS

The invention will now be described in greater detail based on embodiments with reference to the accompanying drawings in which:

Fig. 1 shows a schematic block diagram of a multicarrier communications system with beamforming control according to a first embodiment;

Fig. 2 shows flow diagram of a beamforming procedure according to the first embodiment;

Fig. 3 shows a diagram indicating error performance with and without channel prediction according to the embodiments;

Fig. 4 shows an LTE frame structure which can be used in the embodiments;

Fig. 5 shows a downlink resource grid of the multi-carrier transmission used in the embodiments; and

Fig. 6 shows a schematic block diagram of software-based implementation according to a second embodiment.

DESCRIPTION OF THE EMBODIMENTS

In the following, embodiments of the present invention will be described based on an implementation of a transmitter for a MIMO antenna system of an OFDM-based system, e.g., an LTE system. This transmitter may be provided in an access device (e.g. base station or enhanced Node B (eNB) in LTE terms). However, it is to be noted that the present invention can be applied in various other types of transmission networks with multiple subcarriers and beamforming options.

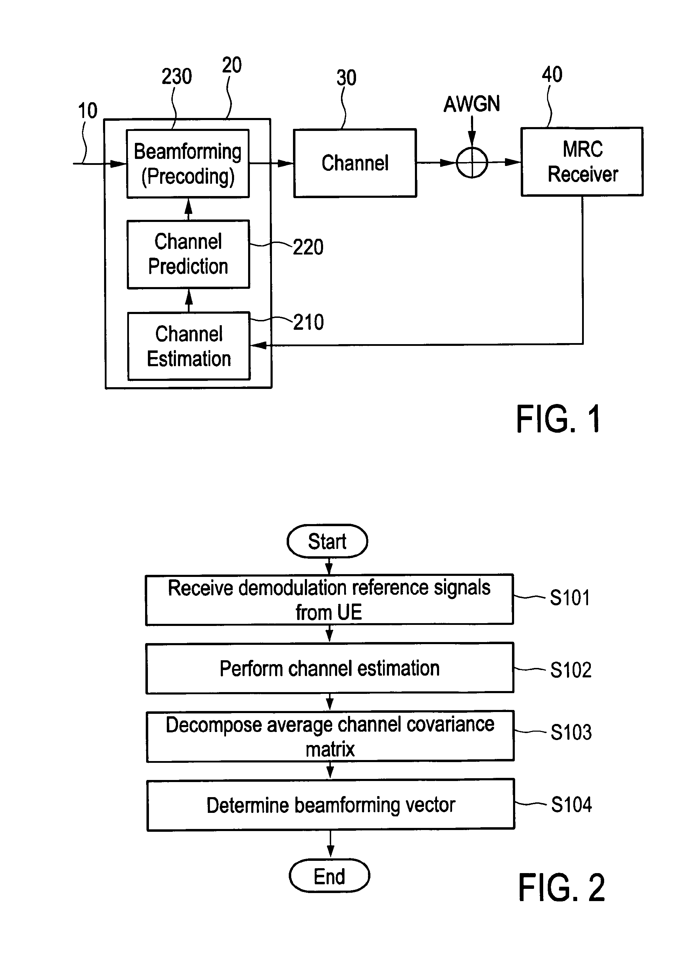

Fig. 1 shows a schematic block diagram of a beamforming system using channel prediction according to a first embodiment.

A modulated transmission signal 10 is supplied to a base station 20 with a beamforming or precoding functionality, stage or unit 230 adapted to apply beamforming so as to mitigate performance degradation due to the influence of channel knowledge delay. The beamforming vector is determined by calculating eigenvector precoding based on terms obtained from a decomposition of the average channel covariance matrix calculated by a channel prediction functionality, stage or unit 220 provided at the base station 20. Channel prediction calculation is performed based on an output of a channel estimation functionality, stage or unit 210 also provided at the base station 20, which follows a predefined procedure adapted to significantly reduce the computational complexity compared to a straightforward subcarrier channel update procedure. Channel estimation at the channel estimation unit 210 is based on feedback information received from the terminal device or user equipment 40 at the other transmission end. After beamforming or precoding, the transmission signal is transmitted over a wireless transmission channel 30 where the transmission signal is influenced by additive white Gaussian noise (AWGN). AWGN is a channel model in which communication is impaired by linear addition of wideband or white noise with a constant spectral density and a Gaussian distribution of amplitude. At the user equipment 40, the transmission signal is received, e.g., by an MRC (Maximum Ratio Combining) receiver. The MRC receiver may work by first converting the signals from multiple antennas into the individual subchannels, and then combining them signals on a subcarrier basis to optimize the quality of the received OFDM signal. Because the signal combination is done in the frequency domain, the MRC receiver is able to utilize multipath diversity to further enhance the received OFDM signal. As a result, dead spots are eliminated, range is improved, and effective throughput is increased.

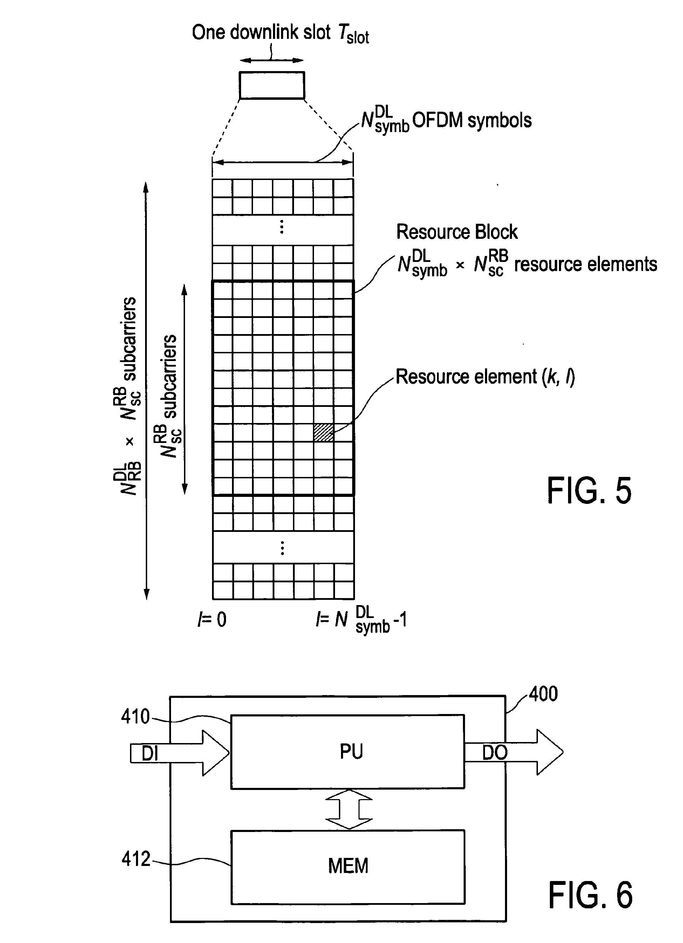

Fig. 5 shows a schematic downlink resource grid structure of an OFDM system. The transmitted signal in each slot is described by a resource grid of a predetermined number of subcarriers and OFDM symbols. The predetermined number of subcarriers depends on the downlink transmission bandwidth configured in the cell. The number of OFDM symbols in a slot depends on a cyclic prefix length and subcarrier spacing configured. In case of multi-antenna transmission, one resource grid is defined per antenna port. An antenna port is defined by its associated reference signal. Each element in the resource grid is called a resource element (RE) and is uniquely identified by an index pair with indices in the frequency and time domains, respectively. A resource block (RB) is defined as a predetermined number of consecutive OFDM symbols in the time domain and a predetermined number of consecutive subcarriers in the frequency domain. A resource block thus consists of a plurality of resource elements, corresponding to one slot in the time domain and a predetermined bandwidth in the frequency domain.

The channel estimation of the channel estimation unit 210 can be performed by either inserting pilot tones or other reference signals into all of the subcarriers of OFDM symbols with a specific period or inserting pilot tones or other reference signals into each OFDM symbol. In the first case, the estimation of the channel for block-type pilot arrangements can be based on Least Square (LS) or Minimum Mean-Square (MMSE). In the second case, comb-type pilot channel estimation consists of algorithms to estimate the channel at pilot frequencies and to interpolate the channel. The estimation of the channel at the pilot frequencies for comb-type based channel estimation can be based on LS, MMSE or Least Mean-Square (LMS).

Fig. 2 shows flow diagram of a beamforming procedure according to the first embodiment. The procedure comprises a first step S101 where the base station 20 receives demodulation reference signals from the user equipment 40. Then, in the next step S102, the channel estimation stage 210 of the base station 20 performs channel estimation based on the received reference signals, possibly including the already detected data symbols (payload). In the following step S103, the channel prediction stage 220 of the base station 20 decomposes a beamforming channel covariance matrix as follows:

$$A_k = \rho^2 A_q + (1-\rho)^2 B + \rho(1-\rho)(C+D) \qquad (1)$$

with

$$A_q = \frac{1}{N_{RB}^{DL} \times N_{sc}^{RB} \times 2N_{sym}^{DL}} \sum_{i=1}^{N_{RB}^{DL} \times N_{sc}^{RB} \times 2N_{sym}^{DL}} H_{i,q}^H H_{i,q} \qquad (2)$$

$$B = \frac{1}{N_{RB}^{DL} \times N_{sc}^{RB} \times 2N_{sym}^{DL}} \sum_{i=1}^{N_{RB}^{DL} \times N_{sc}^{RB} \times 2N_{sym}^{DL}} \overline{H}_i^H \, \overline{H}_i \qquad (3)$$

$$C = \frac{1}{N_{RB}^{DL} \times N_{sc}^{RB} \times 2N_{sym}^{DL}} \sum_{i=1}^{N_{RB}^{DL} \times N_{sc}^{RB} \times 2N_{sym}^{DL}} (H_{i,0}^{H} \overline{H_\iota}) \qquad (4)$$

$$D = C^H \qquad (5)$$

where $H_{i,k} \in R^{M \times N}$ designates a channel matrix on the i-th resource element of the k-th subframe in a system with M receive antennas and N transmit antennas, $N_{RB}^{DL}$ designates the number of RBs used for downlink transmission, $N_{sc}^{RB}$ designates the number of subcarriers per RB, $N_{sym}^{DL}$ designates the number of OFDM symbols in one time slot, wherein one sub-frame consists of two time slots in LTE systems, $\overline{H_i}$ designates the long term time average of the channel matrix on the i-th resource element, p designates the correlation coefficient (typical values are 0.8 < p < 0.98), $(.)^H$ designates the complex conjugate transpose, and $|\cdot|$ designates the absolute value of a scalar value.

Finally, in step S104, a singular value decomposition (SVD) is performed in the beamforming unit 230 on $A_k$ to obtain its dominant singular vector $V \in C^{N \times 1}$ and use it as the beamforming vector on the k-th subframe for transmission.

As a modification of the first embodiment and in order to further reduce the computational complexity, the channel covariance matrix could be computed using only a part of the total available subcarriers.

Consider a MIMO-OFDM system with $N_{RB}^{DL}$ RBs. Each RB consists of $N_{sc}^{RB}$ sub-carriers in the frequency domain and $N_{sym}^{DL}$ symbols. Assume we have an initial channel estimate $H_{i,q}$ on subcarrier i at subframe q, by applying the MMSE estimation theory as described for example in M. V. a. A. Paulraj, "MIMO Wireless Linear Precoding", IEEE Signal Processing magazine, Sep. 2007, an estimation of the channel at subframe k is given by:

$$\hat{H}_{i,k} = \rho H_{i,q} + (1 - \rho)\overline{H_\iota} \qquad (6)$$

where $\rho \in R$ is a function of the time difference between sub-frame k and subframe q and a function of the channel Doppler spread, $\overline{H_t} = E\{H_i\}$ is the channel mean on sub-carrier i. Thus:

$$A_k = \frac{1}{N_{RB}^{DL} \times N_{sc}^{RB} \times 2N_{sym}^{DL}} \sum_{i=1}^{N_{RB}^{DL} \times N_{sc}^{RB} \times 2N_{sym}^{DL}} \hat{H}_{k,i}^{H} \hat{H}_{k,i}$$

$$= \frac{1}{N_{RB}^{DL} \times N_{sc}^{RB} \times 2N_{sym}^{DL}} \sum_{i=1}^{N_{RB}^{DL} \times N_{sc}^{RB} \times 2N_{sym}^{DL}} [\rho H_{i,0} + (1-\rho)\overline{H_i}]^H [\rho H_{i,0} + (1-\rho)\overline{H_i}]$$

$$= \frac{1}{N_{RB}^{DL} \times N_{sc}^{RB} \times 2N_{sym}^{DL}} \sum_{i=1}^{N_{RB}^{DL} \times N_{sc}^{RB} \times 2N_{sym}^{DL}} [|\rho|^2 H_{i,0}^H H_{i,0} + \rho(1-\rho)H_{i,0}^H \overline{H_i} + \rho(1-\rho) \overline{H_i}^H H_{i,0} + |1-\rho|^2 \overline{H_i}^H \overline{H_i}]$$

$$= |\rho|^2 \frac{1}{N_{RB}^{DL} \times N_{sc}^{RB} \times 2N_{sym}^{DL}} \sum_{i=1}^{N_{RB}^{DL} \times N_{sc}^{RB} \times 2N_{sym}^{DL}} H_{i,0}^H H_{i,0}$$

$$+ \frac{1}{N_{RB}^{DL} \times N_{sc}^{RB} \times 2N_{sym}^{DL}} \rho(1-\rho) \sum_{i=1}^{N_{RB}^{DL} \times N_{sc}^{RB} \times 2N_{sym}^{DL}} (H_{i,0}^H \overline{H_i} + \overline{H_i}^H H_{i,0})$$

$$+ \frac{1}{N_{RB}^{DL} \times N_{sc}^{RB} \times 2N_{sym}^{DL}} |1-\rho|^2 \sum_{i=1}^{N_{RB}^{DL} \times N_{sc}^{RB} \times 2N_{sym}^{DL}} \overline{H_i}^H \overline{H_i}$$

$$(7)$$

Thus, according to the proposed channel prediction of the embodiments, the average covariance matrix is decomposed into several terms, as shown in equation (7), resulting in four terms A, B, C and D of equations (2) to (5). Each term is a function of the channel matrix of an initial subframe or channel mean of the sub-carriers or both, which can be saved in the memory without having to recomputed every subframe. Subsequently, eigenvector precoding is calculated based on these terms resulting in significantly reduced computational complexity.

Assuming M = N, the number of multiplication needed for our proposed method and a straightforward updating method can be calculated as follows. It can be seen that the proposed method can significantly save the number of needed multiplications, as shown in the following table:

| Straightforward updating method | | Proposed method | |
|---|---|---|---|
| Operation | Number of complex multiplications | Operation | Number of complex multiplications |
| $\rho H_{i,0}$ | $M^2 \cdot N_{RB}^{DL} \cdot N_{sym}^{RB} \cdot 2N_{sym}^{DL}$ Should be updated every sub-frame | $\rho A_\theta$ | $M^3 \cdot N_{RB}^{DL} \cdot N_{sym}^{RB} \cdot 2N_{sym}^{DL} + M^2$ Calculate once every 10 subframes |
| $(1 - \rho)\overline{H}_i$ | Negligible (not up-dated every several subframe but every hundred subframes) | $(1 - \rho)^2 B$ | Negligible (not updated every several subframe but every hundred subframes) |
| $\sum_{i=1}^{N_{RB}^{DL} \times N_{sc}^{RB} \times 2N_{sym}^{DL}} \widehat{H}_{k,i}^H \widehat{H}_{k,i}$ | $M^3 \cdot N_{RB}^{DL} \cdot N_{sym}^{RB} \cdot 2N_{sym}^{DL}$ Should be updated every sub-frame | $\rho(1 - \rho)(C + D)$ | $M^3 \cdot N_{RB}^{DL} \cdot N_{sym}^{RB} \cdot 2N_{sym}^{DL} + M^2$ Calculate once every 10 subframes |
| **Total for one frame** | $N_{RB}^{DL} \cdot N_{sym}^{RB} \cdot 2N_{sym}^{DL} \cdot (M^3 + M^2) \times 10$ | **Total for one frame** | $(M^3 \cdot N_{RB}^{DL} \cdot N_{sym}^{RB} \cdot 2N_{sym}^{DL} + M^2) \times 2$ |

Hence, to reduce computational complexity, channel prediction is not directly applied on a per sub-carrier basis. Instead, the average channel covariance matrix is updated according to equations (1) to (5), which significantly reduces computational complexity in terms of the number of multiplications.

Fig. 3 shows an example of the simulation results for bit error rate (BER) and block error rate (BLER) performance over signal-to-noise ratio (SNR) without channel prediction and with channel prediction in an LTE Extended Vehicular A model 5 (EVA5) scenario. Here, a system bandwidth of 10 MHz (50 RBs) is assumed in the system. The total RBs are divided into 5 groups with each group having 10 RBs. Each group applies for all its subcarriers an identical precoding or beamforming vector, which is designed to be the dominant eigenvector of the channel covariance matrix of all the subcarriers inside the group. Furthermore, practical channel estimation using one dimensional Wiener filtering is applied. Channel knowledge delay is assumed to be 15 ms corresponding to the duration of 15 sub-frames. It can be seen that both the BER and BLER performances using channel prediction are improved compared to the case without channel prediction.

Fig. 6 shows a schematic block diagram of an alternative software-based implementation according to a second embodiment. The required functionalities can be implemented in a transmission control circuit or apparatus 400 of a base station device, with a processing unit 410 which may be any processor or computer device with a control unit which performs control based on software routines of a control program stored in a memory 412. The control program may also be stored separately on a computer-readable medium. Program code instructions are fetched from the memory 412 and are loaded to the control unit of the processing unit 410 in order to perform the processing steps of Fig. 2, which may be implemented as the above mentioned software routines. The processing steps may be performed on the basis of input data DI and may generate output data DO. The input data DI may correspond to the feedback information received from a user equipment and the output data DO may correspond to the precoding or beamforming vector.

Consequently, the functionalities of the above embodiments may be implemented as a computer program product comprising code means for generating each individual step of the frame alignment procedure when run on a computer device or data processor of the respective entity.

In summary, a method and apparatus for controlling transmission of a signal through a wireless transmission channel by using beamforming in a multiple antenna system have been described, wherein reference signals from the other transmission end of the transmission channel are received and channel estimation is performed based on the received reference signals. An average channel covariance matrix is decomposed into several terms and a eigenvector precoding or beamforming is performed based on these terms.

It is apparent that the invention can easily be extended to any access and/or terminal device and system and is not restricted to LTE networks. It can be applied in low mobility environments, e.g., pico and femtocells to improve the BER/BLER performance.

The proposed embodiments can be implemented in connection with any base station or access device deployed in any OFDM-based cellular or wireless network. The embodiments may thus vary within the scope of the attached claims.

**Claims**

1. A method of controlling transmission of a signal through a wireless transmission channel by using beamforming in a multiple antenna system, said method comprising:

   a. receiving (S101) reference signals from the other transmission end of said transmission channel;
   b. performing (S102) channel estimation based on said received reference signals;
   c. decomposing (S103) an average channel covariance into several terms, each term being a function of at least one of a channel matrix of an initial subframe or a channel mean of said subcarriers; and
   d. calculating (S104) eigenvector precoding or beamforming based on said terms.

2. The method according to claim 1, wherein a dominant eigenvector of a decomposed average channel covariance matrix of a transmission subframe is used as a beamforming vector for transmitting said transmission subframe.

3. The method according to any one of the preceding claims, wherein only a part of the total number of available transmission subcarriers is used for decomposing said average channel covariance matrix.

4. The method according to any one of the preceding claims, further comprising performing said channel estimation by applying a minimum mean square error estimation of said transmission channel at a transmission subframe.

5. The method according to claim 4, wherein said channel estimation is performed by using a one-dimensional Wiener filtering.

6. The method according to any one of the preceding claims, further comprising dividing transmission resource blocks into a predetermined number of groups of resource blocks and applying the same beamforming vector to all sub-carriers inside a group.

7. An apparatus for controlling transmission of a signal through a wireless transmission channel by using beamforming in a multiple antenna system, said apparatus comprising:

   a. a channel estimator (210) for receiving reference signals from the other transmission end of said transmission channel and for performing channel estimation based on said received reference signals;
   b. a channel predictor (220) for decomposing an average channel covariance into several terms, each term being a function of at least one of a channel matrix of an initial subframe or a channel mean of said subcarriers, and for calculating eigenvector precoding or beamforming based on said terms.

8. The apparatus according to claim 7, wherein said channel predictor (220) is adapted to use a dominant eigenvector of a decomposed channel covariance matrix of a transmission subframe as a beamforming vector for transmitting said transmission subframe.

9. The apparatus according to claim 7 or 8, wherein said channel predictor (220) is adapted to use only a part of the total number of available transmission subcarriers for decomposing said average channel covariance matrix.

10. The apparatus according to any one of claims 7 to 9, wherein said channel estimator (210) is adapted to perform said channel estimation by applying a minimum mean square error estimation of said transmission channel at a transmission subframe.

11. A network access device (20) comprising an apparatus according to claim 7.

12. The network access device according to claim 11, further comprising a beamformer or precoder (230) for dividing resource blocks of said transmission into a predetermined number of groups of resource blocks and applying the same beamforming vector to all subcarriers inside a group.

13. A computer program product comprising code means for producing the steps of method claim 1 when run on a computer device.

**FIG. 1**

**FIG. 2**

FIG. 3

FIG. 4

One downlink slot $T_{\text{slot}}$

$N_{\text{symb}}^{\text{DL}}$ OFDM symbols

Resource Block
$N_{\text{symb}}^{\text{DL}} \times N_{\text{sc}}^{\text{RB}}$ resource elements

$N_{\text{RB}}^{\text{DL}} \times N_{\text{sc}}^{\text{RB}}$ subcarriers

$N_{\text{sc}}^{\text{RB}}$ subcarriers

Resource element ($k$, $l$)

FIG. 5

$l = 0$          $l = N_{\text{symb}}^{\text{DL}} - 1$

400

410
DI

PU

DO

412

MEM

FIG. 6

## EUROPEAN SEARCH REPORT

Application Number

EP 11 00 5254

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/323847 A1 (NA YANXIN [US] ET AL) 31 December 2009 (2009-12-31) * abstract * * paragraphs [0045] - [0052] * | 1-13 | INV. H04B7/06 H04B7/04 H04L25/02 |
| X | QIUBIN GAO ET AL: "Utilization of channel reciprocity in advanced MIMO system", COMMUNICATIONS AND NETWORKING IN CHINA (CHINACOM), 2010 5TH INTERNATIONAL ICST CONFERENCE ON, IEEE, PISCATAWAY, NJ, USA, 25 August 2010 (2010-08-25), pages 1-5, XP031847202, ISBN: 973-963-9799-97-4 * abstract * * paragraphs [00II], [III.A] * | 1-13 | |
| A | WO 2005/109678 A1 (KOREA ELECTRONICS TELECOMM [KR]; SAMSUNG ELECTRONICS CO LTD [KR]; SK T) 17 November 2005 (2005-11-17) * abstract * * paragraphs [0041] - [0045] * | 1,7,13 | TECHNICAL FIELDS SEARCHED (IPC)<br><br>H04B<br>H04L |

The present search report has been drawn up for all claims

| Place of search | Date of completion of the search | Examiner |
|---|---|---|
| The Hague | 7 September 2011 | Lustrini, Donato |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 00 5254

This annex lists the patent family members relating to the patent documents cited in the above-mentioned European search report.
The members are as contained in the European Patent Office EDP file on
The European Patent Office is in no way liable for these particulars which are merely given for the purpose of information.

07-09-2011

| Patent document cited in search report | | Publication date | Patent family member(s) | | Publication date |
|---|---|---|---|---|---|
| US 2009323847 | A1 | 31-12-2009 | WO | 2010002491 A1 | 07-01-2010 |
| WO 2005109678 | A1 | 17-11-2005 | KR | 20050106657 A | 11-11-2005 |
| | | | US | 2009067513 A1 | 12-03-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. V. A. A. PAULRAJ.** MIMO Wireless Linear Precoding. *IEEE Signal Processing magazine,* September 2007